# EUROPÄISCHE PATENTSCHRIFT

(11) **EP 0 707 210 B1**
(45) Veröffentlichungstag und Bekanntmachung des Hinweises auf die Patenterteilung: **17.12.2003**
(21) Anmeldenummer: 95115597.7
(22) Anmeldetag: 04.10.1995
(51) Int. Cl.: G01N 31/22, G01N 33/52

(54) **Mittel und Verfahren zur Bestimmung von Ammoniumionen**
Agent and method for determination of ammonium ions
Agent et méthode de détermination d'ions d'ammonium

(30) Priorität: 15.10.1994 DE 4436948
(43) Veröffentlichungstag der Anmeldung: 17.04.1996
(73) Patentinhaber: MERCK PATENT GmbH, 64293 Darmstadt (DE)
(72) Erfinder: Tanzer, Dieter, Dr., D-64372 Ober-Ramstadt (DE)

(56) Entgegenhaltungen:
- EP-A- 0 287 112
- US-A- 4 507 388
- THE ANALYST, Band 109, Mai 1984 P.L. SEARLE "The Berthelot or Indophenol Reaction and Its Use in the Analytical Chemistry of Nitrogen" Seiten 549-568
- ANALYTICAL CHEMISTRY, Band 49, M rz 1977 C.J. PATTON et al. "Spectro- photometric and Kinetics Investigation of the Berthe- lot Reaction for the Determi- nation of Ammonia" Seiten 464-469

## Beschreibung

Die Erfindung betrifft Mittel und Verfahren zur Bestimmung von Ammoniumionen in wäßrigen Lösungen nach der Berthelot-Methode.

Die Bestimmung des Ammoniumgehaltes ist eine sehr wichtige Routineaufgabe der Umweltanalytik, insbesondere der Wasseranalytik geworden. Die Bestimmung kann dabei nach drei unterschiedlichen Verfahren erfolgen:
- Abtrennung des Ammoniaks durch Destillation in alkalischem Milieu, gefolgt von einer acidimetrischen Titration
- Potentiometrische Bestimmung mit ionenenselektiven Elektroden oder
- Kolorimetrische bzw. photometrische Bestimmung nach Bildung einer farbigen Verbindung.

Die Bestimmungen auf der Basis einer Farbbildung haben in den letzten Jahren zunehmende Bedeutung erlangt. Als Farbreaktion für Ammoniumionen werden dabei in der Regel die Methoden nach Neßler oder Berthelot eingesetzt. Aufgrund der hohen Nachweisempfindlichkeit, der hohen Selektivität und der relativ geringen Störanfälligkeit, hat sich insbesondere die Berthelot-Reaktion als Nachweisverfahren für Ammoniumionen etabliert. Die Anwendungsgebiete sind sehr vielfältig, z.B. Bestimmung von Ammoniumionen in Wasser, Lebensmitteln, Bodenextrakten, biologischen Materialien usw.

Die Bildung eines blauen Farbstoffs beim Zusammengeben von Ammoniumionen, Hypochlorit und Phenol wurde bereits 1859 von Berthelot beschrieben. Die Aufklärung des Reaktionsmechanismus war danach Gegenstand zahlreicher Untersuchungen (Anal. Chem. 49, 464 (1977)). Eine Voraussetzung für den Ablauf der Reaktion ist eine freie para-Position am verwendeten Phenol. In Abhängigkeit von der verwendeten Hypochloritquelle und von der eingesetzten Phenolkomponente müssen für einen optimalen Reaktionsablauf charakteristische Reaktionsbedingungen wie pH-Wert, zeitliche Abfolge der Reagenzzugabe, eingehalten werden. Als Phenolkomponente werden in der Regel Phenol selbst, Salicylsäure und Thymol eingesetzt (US-A-4 507 388). Im Hinblick auf eine hohe Nachweisempfindlichkeit und hohe Reaktionsgeschwindigkeit wurden im Stand der Technik noch eine Reihe weiterer Phenolderivate eingehender auf ihre Eignung zum quantitativen Nachweis von Ammoniumionen untersucht. Unter ihnen haben sich insbesondere noch 2-Methylphenol, 2,6-Dimethylphenol, 2-Chlorphenol, 2,6-Dichlorphenol, Guajacol, o-Phenylphenol, m-Cresol, 1-Naphthol und 2-Methyl-5-hydroxychinolin als brauchbar erwiesen (Analyst 109, 549 (1984)).

Es hat nicht an Versuchen gefehlt, die Berthelot-Reaktion durch Wahl geeigneter Reagenzien und Reaktionsbedingungen so weit zu optimieren, daß ein Einsatz in kontinuierlich messenden Systemen und kommerziell verfügbaren Testsätzen möglich wurde. Der Einsatz blieb jedoch bisher der Naßchemie vorbehalten, d.h. für Reaktionen, für die ausschließlich flüssige Reagenzien eingesetzt werden.

In jüngerer Zeit hat jedoch die Analyse mit festen saugfähigen Trägern, den sogenannten Teststäbchen, zunehmend an Bedeutung gewonnen. Zu den wesentlichen Vorteilen der Verwendung von Teststäbchen gehören insbesondere die einfache Handhabung sowie die aufgrund der geringen Reagenzmengen unproblematische Entsorgung. Alle oder ein Teil der für die Nachweisreaktion notwendigen Reagenzien sind dabei auf saugfähigen oder quellbaren Trägern oder Filmen aufgebracht. Nach Kontakt der Reaktionszone mit der Probe läuft die Nachweisreaktion ab. Die gebildete Farbe ist ein Maß für die Menge des zu bestimmenden Analyts und kann visuell mit Hilfe von Farbvergleichsskalen bzw. mit einfachen Reflektometern ausgewertet werden.

Teststäbchen zum Nachweis von Ammoniumionen auf Basis der Neßler-Reaktion sind bekannt, sie sind jedoch nur zum Nachweis höherer Ammoniumionen-Gehalte von mehr als 20 ppm geeignet. Aufgrund der meist geringeren Ammoniumionen-Gehalte in Wasserproben können diese daher häufig nicht herangezogen werden. Zur Bestimmung von Ammoniumionen in Blutplasma existieren mehrschichtige Teststreifensysteme, wobei der Nachweis bei diesem System jedoch auf dem Farbumschlag eines pH-Indikators (Bromphenolblau) basiert.

Der Erfindung liegt die Aufgabe zugrunde, ein Mittel und Verfahren zur Bestimmung von Ammoniumionen in wäßrigen Lösungen nach Berthelot zur Verfügung zu stellen, das einfach in der Ausführung, empfindlich und spezifisch ist und sich zur Auswertung mit einem Reflektometer eignet.

Gegenstand der Erfindung ist ein Mittel zur Bestimmung von Ammoniumionen in wäßrigen Lösungen nach Berthelot, das dadurch gekennzeichnet ist, daß es einen mit einem Phenolderivat imprägnierten saugfähigen Träger enthält.

Ein weiterer Gegenstand der Erfindung ist ein Verfahren zur Bestimmung von Ammoniumionen in wäßrigen Lösungen nach Berthelot, das dadurch gekennzeichnet ist, daß man einen mit einem Phenolderivat imprägnierten saugfähigen Träger mit einer Hypochlorit oder einem Hypochloritbildner enthaltenden alkalischen Probelösung in Kontakt bringt und nach einer bestimmten Zeit die Farbänderung auf dem Träger auswertet.

Es wurde festgestellt, daß die im Stand der Technik zum quantitativen Nachweis von Ammoniumionen beschriebenen Phenole aus den verschiedensten Gründen, wie Lagerstabilität, Nachweisempfindlichkeit, Reaktionskinetik, unerwünschte Nebenreaktionen, Farbstabilität des gebildeten Indophenols, Toxizität, Reproduzierbarkeit des Nachweises usw., für eine Übertragung der Berthelot-Reaktion auf einen festen Testträger nicht geeignet sind. Insbesondere waren gerade die in Bezug auf Farbbildung und Kinetik geeignetsten Phenole zu flüchtig und zeigten nicht die erforderliche Affinität zum Trägermaterial. Dies äußerte sich u.a. in einer mehr oder weniger starken Geruchsentwicklung, wenn die zur Aufbewahrung der Teststäbchen verwendete Dose geöffnet wurde.

Überraschenderweise wurde gefunden, daß Phenolderivate wie Hydroxyphenylalkylalkohole, Hydroxyphenylalkylcarbonsäuren und Hydroxyzimtsäure, wobei die Hydroxygruppe in 2- oder 3-Position steht und die Alkylgruppe 1 bis 6 C-Atome enthält, für das erfindungsgemäße Mittel geeignet sind. Infrage kommen z.B. Hydroxybenzylalkohol, Hydroxyphenylessigsäure, Hydroxyzimtsäure, 2-(2-Hydroxyphenyl)-ethanol, 2-(3-Hydroxyphenyl)-ethanol, 3-(2-Hydroxyphenyl)-propanol, 4-(2-Hydroxyphenyl)-butanol, 3-(2-Hydroxyphenyl)-propionsäure, 4-(2-Hydroxyphenyl)-buttersäure, 5-(2-Hydroxyphenyl)-valeriansäure. Vorzugsweise geeignet sind 2-Hydroxybenzylalkohol, 2-Hydroxyphenylessigsäure und Hydroxyzimtsäure, insbesondere 2-Hydroxybenzylalkohol. Die erfindungsgemäßen saugfähigen Träger, die diese Verbindungen enthalten, sind bei Raumtemperatur über ein Jahr lang lagerfähig.

Als saugfähige Träger können alle verwendet werden, die üblicherweise für solche Tests im Gebrauch sind. Am weitesten verbreitet ist die Verwendung von Filterpapier, jedoch können auch andere saugfähige Cellulose- oder Kunststoffprodukte eingesetzt werden. Die saugfähigen Träger, vorzugsweise Filterpapier, werden in an sich bekannter Weise mit Tränklösungen imprägniert, die einen Teil der zur Bestimmung der Ammoniumionen notwendigen Reagenzien enthalten. Die getränkten und getrockneten Papiere können zu quadratischen bzw. rechteckigen Zonen verarbeitet werden, die ihrerseits in bekannter Weise auf Kunststoffolien, Papier- oder Metallstreifen aufgeklebt bzw. aufgesiegelt werden können.

Die saugfähigen Träger können auch vor dem Imprägnieren in Streifenform auf ein Kunststoffband aufgebracht und nach dem Imprägnieren senkrecht zur Streifenrichtung in handliche Stäbchen geschnitten werden.

Es ist von Vorteil, wenn der saugfähige Träger neben dem Phenolderivat zusätzlich noch Katalysatoren enthält. Gegebenenfalls kann der Träger auch Komplexbildner und Puffersubstanzen enthalten. Als Katalysatoren kommen Nitroprussidnatrium, Mangan(II)-salze oder Zinksalze infrage, vorzugsweise Nitroprussidnatrium. Die Tränklösung enthält etwa 0,05 bis 0,2 %, vorzugsweise 0,1 % Nitroprussidnatrium.

Die erwähnten Komplexbildner und Puffersubstanzen können sowohl auf dem saugfähigen Träger vorliegen, als auch der Probelösung zugesetzt werden. Ein Zusatz zur Probelösung hat sich als vorteilhafter erwiesen.

Zur Komplexierung störender Probenbestandteile werden der Probelösung z.B. 1-Hydroxyethan-1,1-diphosphonsäure, Cyclohexyldiaminotetraessigsäure, Citrate, EDTA, zugegeben, vorzugsweise 1-Hydroxyethan-1,1-diphosphonsäure. Die Probelösung enthält etwa 2 bis 10 %, vorzugsweise 5 %, 1-Hydroxyethan-1,1-diphosphonsäure.

Der Probelösung werden Puffersubstanzen zugesetzt, die einen pH-Bereich von 10-12 aufrecht erhalten können und die die Nachweisreaktion nicht stören. Geeignete Puffersysteme sind solche, die auch auf den saugfähigen Träger aufgebracht werden können. Die einzusetzende Pufferkonzentration richtet sich nach dem pH-Wert der Probelösung und nach den dort vorliegenden freien Säuren oder Basen. Als Puffer eignen sich z.B. Natronlauge/Tartrat-Puffer, Natronlauge/Borat-Puffer, Natriumcarbonat/Natriumhydrogencarbonat-Puffer, vorzugsweise Natronlauge/Tartrat-Puffer.

Die mit den genannten Puffersystemen auf einen pH-Wert von etwa 11 eingestellte Probelösung wird mit einem Hypochlorit oder einem Hypochloritbildner versetzt. Bekannte Hypochloritbildner, die für diesen Zweck geeignet sind, sind z.B. Dichlorisocyanursäure, Trichlorisocyanursäure, Chloramin T, wäßrige Lösungen von Chlor. Anstelle von Hypochlorit kann auch Hypobromit verwendet werden. Bevorzugt nach der Erfindung sind Dichlorisocyanursäure und Natriumhypochlorit.

Zur Durchführung der Bestimmung von Ammoniumionen wird der saugfähige Träger 2 bis 20, vorzugsweise etwa 8 Minuten lang so in die alkalische, Hypochlorit enthaltende Probelösung gestellt, daß die Reaktionszone vollständig benetzt ist. Das Teststäbchen wird dann aus der Probelösung entfernt, kräftig abgeschüttelt und die entstandene Färbung wird mit einem Reflektometer oder anhand einer Farbvergleichsskala ausgewertet. Mit dem erfindungsgemäßen Verfahren ist eine, im Gegensatz zu bekannten Verfahren, einfache, genaue und schnelle Bestimmung von Ammoniumionen in wäßrigen Lösungen mittels Teststäbchen möglich, die es erlaubt, Konzentrationen von 0,2 bis 20 mg/l zu bestimmen.

### Beispiel 1

Ein Filterpapier (Schöller & Hösch 300A) wird mit folgender Reagenzlösung getränkt und nach der Tränkung mit warmer Luft getrocknet:

| | |
|---|---|
| 3,5 g | 2-Hydroxybenzylalkohol und |
| 0,1 g | Nitroprussidnatrium |
| in 100 g | Wasser. |

Das erhaltene Papier wird auf ein Trägermaterial, z.B. Polyesterfolie, in bekannter Weise aufgebracht.

Es werden Ammoniumionen-Standardlösungen mit Gehalten von 0 bis 10 mg/l hergestellt, die einen pH-Wert von 11 aufweisen und 1 mg Dichlorisocyanursäure pro 5 ml Lösung enthalten. Die Teststäbchen werden in die Lösungen gestellt, nach 8 Minuten entfernt, abgeschüttelt und durch Messung der relativen Remission mit einem einfachen Reflektometer und visuell kolorimetrisch ausgewertet.

Die Pufferlösung zur Einstellung des pH-Wertes enthält

| | |
|---|---|
| 44 g | Kaliumnatriumtartrat, |
| 9 g | NaOH-Plätzchen und |
| 5 g | 1-Hydroxyethan-1,1-diphosphonsäure-Natriumsalz |
| in 100 g | Wasser. |

a) Visuell kolorimetrische Auswertung:

| | | | | | |
|---|---|---|---|---|---|
| Konz. [mg/l] | 0 | 0.5 | 2.5 | 5.0 | 10.0 |
| Farbe | farblos | hellgrün | türkis | hellblau | blau |

Die Versuche zeigen, daß verschiedene Konzentrationen von Ammoniumionen deutlich unterschiedliche Färbungen erzeugen und sich dadurch mit Hilfe einer entsprechenden Farbskala visuell-kolorimetrisch bestimmen lassen.
b) Reflektometrische Auswertung

| | | | | | | | | | |
|---|---|---|---|---|---|---|---|---|---|
| Konz. [mg/l] | 0 | 0.25 | 0.5 | 1.0 | 2.5 | 3.0 | 5.0 | 7.5 | 10.0 |
| rel. Rem. [%] | 74.8 | 72.7 | 69.5 | 63.5 | 53.6 | 42.4 | 28.2 | 18.4 | 13.7 |

Der oben gemessene Remissions-Konzentrationsverlauf (Kalibrationskurve) wurde mittels eines Barcodelesesystems in ein Reflektometer eingelesen und der Zusammenhang zwischen eingesetzter und gemessener Konzentration ermittelt:

| | | | | |
|---|---|---|---|---|
| eingesetzte Konz. [mg/l] | 0,5 | 1,0 | 2,5 | 6,5 |
| | | | | |
| gemessene Konz. [mg/l] | 0,5 | 1,0 | 2,5 | 6,2 |
| | 0,5 | 1,0 | 2,4 | 6,5 |
| | 0,5 | 0,9 | 2,5 | 6,6 |
| | 0,5 | 1,1 | 2,4 | 6,8 |
| | 0,5 | 1,0 | 2,6 | 6,3 |

Wie die Ergebnisse zeigen, ermöglicht der empfindliche Remissions-Konzentrationsverlauf verbunden mit der hohen Reproduzierbarkeit der Nachweisreaktion eine sehr empfindliche und präzise Bestimmung von Ammoniumionen.

Analoge Ergebnisse werden erhalten, wenn anstelle von 2-Hydroxybenzylalkohol als Phenolderivat 2-Hydroxyphenylessigsäure oder Hydroxyzimtsäure eingesetzt wird.

### Beispiel 2

Neun verschiedene Abwasserproben werden analog Beispiel 1 reflektometrisch auf ihren Gehalt an Ammoniumionen untersucht.
Vergleichend dazu werden die Proben nach einem üblichen photometrischen Verfahren analysiert mit folgenden Ergebnissen:

| Probe | Reflektometrie [mg/l] | Photometrie [mg/l] |
|---|---|---|
| 1 | 3,8 | 3,5 |
| 2 | 4,6 | 4,8 |
| 3 | 4,9 | 5,1 |
| 4 | 2,6 | 2,4 |
| 5 | 4,6 | 4,5 |
| 6 | 4,2 | 4,1 |
| 7 | 0,5 | 0,4 |
| 8 | 0,6 | 0,6 |
| 9 | 0,6 | 0,7 |

Das Verfahren mittels Teststäbchen ermöglicht eine im Gegensatz zu bestehenden Methoden einfache, genaue und schnelle Ammoniumbestimmung in wäßrigen Probelösungen.

### Beispiel 3

Ein Filterpapier (Schöller & Hösch 300A) wird nacheinander mit den folgenden Lösungen getränkt und nach jeder Tränkung mit warmer Luft getrocknet:

| | | |
|---|---|---|
| Lösung 1 | 3,5 g | 2-Hydroxybenzylalkohol und |
| | 0,1 g | Nitroprussidnatrium |
| | in 100 g | Wasser. |

| | | |
|---|---|---|
| Lösung 2 | 10 g | Kaliumnatriumtartrat, |
| | 2 g | NaOH-Plätzchen und |
| | 1,1 g | 1-Hydroxyethan-1,1-diphosphonsäure-Natriumsalz |
| | in 100 g | Wasser. |

Der Nachweis wird nach Beispiel 1 durchgeführt. Es werden analoge Ergebnisse erhalten wie in Beispiel 1.

## Patentansprüche

1. Mittel zur Bestimmung von Ammoniumionen in wäßrigen Lösungen nach Berthelot, **dadurch gekennzeichnet, daß** es einen saugfähigen Träger enthält, der mit einem Phenolderivat aus der Gruppe der Hydroxyphenylalkylalkohole, Hydroxyphenylalkylcarbonsäuren oder Hydroxyzimtsäure imprägniert ist.

2. Mittel nach Anspruch 1, **dadurch gekennzeichnet, daß** der saugfähige Träger zusätzlich noch Katalysatoren und gegebenenfalls Komplexbildner und Puffersubstanzen enthält.

3. Mittel nach den Ansprüchen 1 bis 2, **dadurch gekennzeichnet, daß** es als Phenolderivat Hydroxybenzylalkohol, Hydroxyphenylessigsäure oder Hydroxyzimtsäure enthält, wobei die Hydroxygruppe in 2- oder 3-Position steht.

4. Mittel nach den Ansprüchen 1 bis 3, **dadurch gekennzeichnet, daß** es 2-Hydroxybenzylalkohol und Nitroprussidnatrium enthält.

5. Verfahren zur Bestimmung von Ammoniumionen in wäßrigen Lösungen nach Berthelot, **dadurch gekennzeichnet, daß** man ein Mittel enthaltend einen mit einem Phenolderivat imprägnierten saugfähigen Träger entsprechend Anspruch 1 mit einer Hypochlorit oder einem Hypochloritbildner enthaltenden alkalischen Probelösung in Kontakt bringt und nach einer bestimmten Zeit die Farbänderung auf dem Träger auswertet.

## Claims

1. Means for the determination of ammonium ions in aqueous solutions by the Berthelot method, **characterized in that** it contains an absorptive support which is impregnated with a phenol derivative selected from the group consisting of hydroxyphenylalkyl alcohols, hydroxyphenylalkylcarboxylic acids and hydroxycinnamic acid.

2. Means according to Claim 1, **characterized in that** the absorptive support additionally contains catalysts and, if desired, complexing agents and buffer substances.

3. Means according to either of Claims 1 and 2, **characterized in that** the phenol derivative present is hydroxybenzyl alcohol, hydroxyphenylacetic acid or hydroxycinnamic acid, where the hydroxy group is in the 2 or 3 position.

4. Means according to any of Claims 1 to 3, **characterized in that** it contains 2-hydroxybenzyl alcohol and sodium nitroprusside.

5. Method for the determination of ammonium ions in aqueous solutions by the Berthelot method, **characterized in that** a means containing an absorptive support impregnated with a phenol derivative according to Claim 1 is brought into contact with an alkaline sample solution containing hypochlorite or a hypochlorite former and the colour change on the support is evaluated after a certain time.

## Revendications

1. Agent de détermination d'ions ammonium dans les solutions aqueuses selon Berthelot, **caractérisé en ce qu'**il contient un porteur pompable, qui est imprégné avec un dérivé phénolique du groupe des alcools hydroxyphénylalkyliques, acides hydroxyphénylalkylcarboxyliques ou acide hydroxycinnamique.

2. Agent selon la revendication 1, **caractérisé en ce que** le porteur pompable contient en plus des catalyseurs et le cas échéant des agents complexants et des substances tampons.

3. Agent selon les revendications 1 à 2, **caractérisé en ce qu'**il contient comme dérivé phénolique de l'alcool hydroxybenzylique, de l'acide hydroxyphénylacétique ou de l'acide hydroxycinnamique, dans lequel le groupe hydroxy est en position 2 ou 3.

4. Agent selon les revendications 1 à 3, **caractérisé en ce qu'**il contient de l'alcool 2-hydroxybenzylique et du nitroprussiate de sodium.

5. Procédé de détermination d'ions ammonium dans les solutions aqueuses selon Berthelot, **caractérisé en ce qu'**un agent contenant un porteur pompable imprégné d'un dérivé phénolique correspondant à la revendication 1 est mis en contact avec une solution échantillon contenant un hypochlorite ou un formateur d'hypochlorite et le changement de couleur est évalué sur le porteur au bout d'un temps défini.
